# EUROPEAN PATENT SPECIFICATION

(11) **EP 4 122 668 B1**
(45) Date of publication and mention of the grant of the patent: **15.11.2023**
(21) Application number: 21187196.7
(22) Date of filing: 22.07.2021
(51) Int. Cl.: B29C 33/52, B29C 33/48, B29C 33/76, B29C 70/42

(54) **METHOD OF MANUFACTURING A CORE FOR PRODUCING A COMPOSITE STRUCTURE, A CORE FOR PRODUCING A COMPOSITE STRUCTURE, AND METHOD OF PRODUCING A COMPOSITE STRUCTURE**
VERFAHREN ZUR HERSTELLUNG EINES KERNS ZUR HERSTELLUNG EINER VERBUNDSTRUKTUR, KERN ZUR HERSTELLUNG EINER VERBUNDSTRUKTUR UND VERFAHREN ZUR HERSTELLUNG EINER VERBUNDSTRUKTUR
PROCÉDÉ DE FABRICATION DE NOYAU POUR LA PRODUCTION DE STRUCTURE COMPOSITE, NOYAU POUR LA PRODUCTION DE STRUCTURE COMPOSITE ET PROCÉDÉ DE PRODUCTION DE STRUCTURE COMPOSITE

(43) Date of publication of application: 25.01.2023
(73) Proprietor: Airbus Operations GmbH, 21129 Hamburg (DE)
(72) Inventor: Weinholdt, Michael, 21129 Hamburg (DE); Seul, Thomas, 98574 Schmalkalden (DE); Merbach, Luise, 98574 Schmalkalden (DE)
(74) Representative: Schornack, Oliver

(56) References cited:
- EP-A1- 2 327 526
- JP-A- H 071 466
- JP-A- H02 155 705

## Description

The invention relates to a method of manufacturing a core for producing a composite structure, the core comprising a metal element, and further relates to such a core and a method of producing a composite structure using the core. In particular, the invention relates to a method of manufacturing a core for producing a composite structure, the core comprising a metal element that can be heated by induction heating and that divides the core in at least two portions. The invention further relates to such a core, and a method of producing a composite structure using the core and melting the core in portions by induction heating.

Composite structures, such as structures made from fibre reinforced plastic, are widely used in all fields of construction, particularly the construction of the vehicles. However, the composite structures become more and more complex, facilitating a faster production and providing a strong structure. Particularly, the composite structures become complex and bigger by combining several portions and components of the composite structure and curing them at once.

This has led to composite structures comprising inner spaces that require a mould, but which cannot be removed easily due to the complexity of the composite structure. Thus, such inner moulds have been left in the composite structure. Since this increases the overall weight of the composite structure, some inner moulds have been made from a material that can be melted, particularly during heating the composite structure while curing.

Since such meltable inner moulds are usually made from a metal, the handling of the inner moulds becomes difficult, due to the weight of the inner mould.

The document EP 2 327 526 A1 discloses a method of manufacturing a core for producing a composite structure, the method comprising forming a core having an outer surface, wherein the outer surface is configured to form a moulding surface of an inner space of the composite structure; and integrating into the core at least one metal element.

It is therefore an object of the invention to provide a method of manufacturing a core for producing a composite structure, to provide such core and to provide a method of producing a composite structure, that facilitate easy producing of a composite structure with a lightweight core.

This object is achieved by a method with the features of claim 1, a core with the features of claim 8, and a method of producing a composite structure with the features of claim 12.

Preferred embodiments are defined by the dependent claims.

According to a first exemplary aspect for understanding the present disclosure, a method of manufacturing a core for producing a composite structure comprises forming a core having an outer surface, wherein the outer surface is configured to form a moulding surface of an inner space of the composite structure, and integrating into the core at least one metal element configured to be heated by induction heating. The formed core, hence, is to be used as an inner mould for the composite structure. Since it includes at least one metal element, the inner core particularly the at least one metal element, can be heated by induction heating. This allows heating the core through the composite structure, for example, by applying an induction coil next to the composite structure and generating an electromagnetic field in at least a portion of the core. This allows removal of the core even after completion of the curing of the composite structure.

The at least one metal element divides the core in at least two portions. Thus, when heating the at least one metal element, the core can be separated into the at least two portions. Removal of the core is therefore facilitated, since smaller pieces of the core can be removed from the composite structure.

In an implementation variant, one of the at least two portions of the core may be melted, so that melting and removal of the core can be controlled. For instance, the at least one metal element may be arranged in the core in such a manner that the at least two portions of the core are arranged adjacent to one another in a certain direction. Along this certain direction the portions of the core can be melted and removed from the inside of the cured composite structure. For example, a portion of the core next to an opening in the composite structure allowing flow out of the melted core may be melted first. Thus, the next portion of the core in the certain direction (preferably away from the opening in the composite structure) can subsequently be melted and easier removed from the composite structure, since the first portion is already discharged. This also applies to a removal of the core portions without melting the core portions, but by removing the portions through an opening sized to allow discharge of the core portions.

Alternatively or additionally, the at least one metal element can form at least a portion of the outer surface of the core. In other words, the at least one metal element and, hence, at least a portion of the outer surface of the core forms one portion of the core while the remainder inside of the at least one metal element forms another portion of the core. By melting the at least one metal element, the cured composite structure can be demoulded by reducing the size of the core. The "inner" portion of the core can then be removed through an opening in the composite structure.

As an example only, the "inner" portion of the core can be a longitudinal element having a substantially continuous cross section over its extent in the longitudinal direction, while the outer shape of the core providing the complex shape for the composite structure is formed by the at least one metal element. Thus, any complex shape of the outer surface of the core is achieved with the at least one metal element, so that the complex part of the core can be melted, while the "inner" portion of the court can later be removed (demoulded) in conventional fashion. Of course, the complex shape of the outer surface may further include sections of the core not formed by the at least one metal element, which can be separated from one another as well as separated from the "inner" portion of the core.

Further alternatively or additionally, the at least one metal element can form a portion of the core at a section of the core forming a complex part of the composite structure, such as an undercut or a space inside of the composite structure only reachable through an opening smaller than another dimension of this space. This allows melting the at least one metal element to demould the complex part of the composite structure. The remainder of the core may then at least partially be demoulded in conventional fashion and/or also using induction heating of another of the at least one metal element.

In any case, the core can be used for any composite structure of any shape, including composite structures having complex interior spaces as well as composite structures of straight longitudinal form. The energy required for melting the at least one metal element is smaller compared to conventional techniques melting the entire core and the effect on the composite structure due to heat from such melting is significantly reduced.

In addition, even when discharging of a portion of the core by melting the core the required energy is still smaller than heating the entire core at once and the effect on the composite structure due to the heat for melting the core is significantly reduced.

For example, conventional melting methods require heating the entire composite structure to remove the entire core. In the present disclosure, the melting can be optimised for a minimum of induced heat into the composite structure, an amount of melted core material dischargeable through an opening in the composite structure, a size of an induction coil placeable next to the composite structure (also depending from the form and shape of the composite structure allowing the induction coil to be placed next to the core), or the like.

In an implementation variant, the forming of the core comprises forming at least one section of the core as a honeycomb structure. A honeycomb structure provides a sufficient stable structure withstanding the pressure usually induced into the composite material before and during curing, such as up to 10 bar. In addition, a honeycomb structure is lightweight compared to conventional full body cores. Optionally, the honeycomb structure can be made from a different material than other portions of the core, can be made from a metal material, and/or can be made from or include the at least one metal element.

In another implementation variant, the forming of the core comprises forming a reinforcing element of the core. For instance, depending on the shape of the inner space of the composite structure particular portions of the core may be subject to higher forces during curing of the composite structure than other portions of the core. The reinforcing element may be provided at such particular portions of the core, to provide sufficient strength to the core and keeping the remaining portions of the core lightweight. The reinforcing element can be a thicker section of core material, a beam-like or column-like structure, etc.. The reinforcing element may also be made as a honeycomb structure. The reinforcing element can also be formed by a different material capable of withstanding higher forces and/or having a smaller elasticity (providing higher rigidity), so that the overall size and material employment is not increased.

Alternatively or additionally, the reinforcing element may be formed by the at least one metal element, may be a part of the at least one metal element or may include the at least one metal element. Thus, the partition of the core may be made at sections of the core that require mechanical strengthening, and the reinforcing element may be used to facilitate melting of each of the at least two portions adjacent to the reinforcing element.

The form and structure of the core, any positioning of the reinforcing element and/or the division of the core into the at least two portions may be calculated using associated computing methods, such as finite element methods. In addition, an artificial intelligence may also be employed, in order to optimise these parameters of the core from particular prototypes and measurements of pressure and forces induced into the core during curing as well as melting behaviour of the at least one metal element and/or melting behaviour of the entire core.

In yet another implementation variant, the method can further comprise integrating into the core at least one functional component. For instance, the functional component may be used to control and monitor the curing process of the composite structure. As an example, the at least one functional component can comprise a temperature sensor and/or a pressure sensor, and/or an electrically conductive component for connecting a sensor with a corresponding controller. The functional component may be integrated into the core by directly providing the material of the functional component into the core material. For instance, an electrically conductive material may be provided into the core material to form electrically conductive circuitry including forming a sensor by integrating the respective sensor materials into the core material.

In a further implementation variant, the forming of the core, the integrating of at least one metal element and/or the integrating of at least one functional component can be performed by an additive layer manufacturing method. Such additive layer manufacturing method allows forming of almost any three-dimensional core structure, particularly in a lightweight fashion, as the core can be formed in the form of a framework including hollow portions. A honeycomb structure is only one example for such core form. Of course, any other form including hollow portions which decreases the weight of the core while maintaining stability can be employed.

In addition, the at least one metal element can easily be integrated into the core during the additive layer manufacturing method, since different materials can be added by this method. For example, the core can be manufactured by three-dimensional printing with at least two different materials.

An additive layer manufacturing method further facilitates integration of the at least one functional component. The functional component, such as a sensor and/or an electric conductor can be "printed" with each layer when manufacturing the core. This technique also allows using different materials for the core and also for the functional component and/or for the at least one metal element.

In yet a further implementation variant, the at least one metal element can be made from a bimetal. Such a bimetal allows to be heated using induction heating. In addition, by using at least two different metals for the metal element a force can be induced on the remainder of the core when the bimetal is warmed or heated, particularly on one of the portions of the core to be removed (optionally by melting). Thus, the separation of the core portions can be facilitated by the bimetal.

In another implementation variant, the core can be made from at least one metal material or a bimetal. A metal or bimetal core allows heating the entire core by induction heating. This facilitates a melting and removal of the entire core, for example, by induction.

Alternatively or additionally, the core can comprise a non-metallic material. For example, a polymer may be used to form at least a part of the core. Such polymer is usually suitable for additive layer manufacturing and is further lightweight. Mechanical stability can be provided by the polymer itself as well as by the structure and shape of the core. For instance, a polymer may be used for the at least two portions of the core, while such portions are separated from one another by the at least one metal element. The resulting separated portions of the core may be sized to fit through an opening in the composite structure into the inner space thereof. Likewise, the polymer may be used for an inner portion of the core, while the outer surface is made from or includes at least a part of the at least one metal element. Once the metal element is melted, the core (now reduced in size) can be removed from the inner space of the composite structure.

In yet another implementation variant, the core and the at least one metal element can be formed of materials having different melting temperatures. For example, the at least one metal element may have a higher melting temperature than the remainder of the core, so that an induction heated portion of the core can be melted and removed from the composite structure in a first step. Subsequently, the power used for the induction heating may be increased to melt the at least one metal element, so that this separator and adjacent core portion begins melting and can be removed.

Alternatively, the metal element may have a lower melting temperature than the remainder of the core. This allows separation of the core into the at least two portions while still being inside of the composite structure. By increasing the power used for the induction heating, these core portions may then be melted and removed. In case the at least one metal element forms the outer surface, only one core portion (the "inner" portion of the core) may then be melted and removed.

In an implementation variant, the heating and/or melting of any metal material of the core and/or the at least one metal element may include controlling a frequency and/or power of the electromagnetic field. For instance, by starting with a particular frequency and/or power, a first metal material can be melted. By increasing the frequency and/or power of the electromagnetic field, a second metal material can be melted, and so on. Thus, portions of the core may be removed step-by-step by changing the parameters of the induction coil, i.e. the parameters of the alternating magnetic field (electromagnetic field).

In a further implementation variant, the forming of the core can comprise forming an inner shell of the core, wherein the inner shell delimits an open space inside of the core. Such inner shell does not only avoid material (compared to a full body core), thus reducing the weight of the core, but provides additional strength to the core, as a shell provides a rigid inner structure to the core.

According to a second exemplary aspect for understanding the present disclosure, a core for producing a composite structure comprises an outer surface configured to form a moulding surface of an inner space of the composite structure, and at least one metal element integrated into the core and configured to be heated by induction heating. The at least one metal element divides the core in at least two portions.

Such core can be produced by the method of the first exemplary aspect. Dividing the core by the at least one metal element, allows dividing the core and/or reducing the size of the core while melting by induction heating. Thus, less heating energy has to be provided lessening any effect on the composite structure, since only portions of the core can be melted one after the other.

In an implementation variant, the core can have at least one section formed as a honeycomb structure. Alternatively or additionally, the core can comprise a reinforcing element. This allows provision of a core that is lightweight, mechanically stable and optimised for the inner space of the composite structure.

In another implementation variant, the core can be made from at least one metal material or a bimetal. Alternatively or additionally, the core and the at least one metal element can be formed of materials having different melting temperatures.

Alternatively or additionally, the core can comprise a non-metallic material. For example, a polymer may be used to form at least a part of the core. Such polymer is usually suitable for additive layer manufacturing and is further lightweight. Mechanical stability can be provided by the polymer itself as well as by the structure and shape of the core. For instance, a polymer may be used for the at least two portions of the core, while such portions are separated from one another by the at least one metal element.

For instance, the at least one metal element may be integrated into the core forming a mesh or net. Thus, once the at least one metal element is melted, the inner portions of the mesh or net, i.e. the remainder of the core, is a plurality of small pieces, which can be easily removed from the interior space of the composite structure. The mesh or net may be sized and dimensioned in such a manner, that the remainder of the core is a granulate, once the at least one metal element is melted and/or removed.

In another example, the at least one metal element forms or is part of the outer surface. This allows melting the outer surface or dividing it into the at least two portions, while the remainder of the core, i.e. an "inner" core portion remains after the melting and can be removed in conventional fashion.

Due to the different melting temperatures the core materials can easily be reused. Specifically, due to the different melting temperatures, the different materials will not mix with one another, so that they can be separated by heating the core to the respective melting temperatures. Subsequently, the separated materials can be reused to form another core.

In yet another implementation variant, the core can have at least one functional component integrated therein. Preferably, the at least one functional component comprises a temperature sensor and/or a pressure sensor. The one or more materials used for the at least one functional component may also have different melting temperatures compared with the core and/or the at least one metal element. This also allows the separation of the functional component/s from the remaining materials of the core when melted and removed from the inner space of the composite structure.

According to a third exemplary aspect for understanding the present disclosure, a method of producing a composite structure comprises providing the core according to the second exemplary aspect or one of its implementation variants, providing a fibre material around at least a portion of the core, adding a resin matrix to the fibre material, curing the resin matrix with the fibre material to the composite structure, and applying an electromagnetic induction through the composite structure to the core until the at least one metal element melts and/or until the core melts.

In other words, the composite structure is formed by providing a fibre material and adding a resin matrix at least around at least a portion of the core. It is to be understood that the composite structure may also be formed by providing a pre-preg or other fibre material impregnated with resin matrix that can be cured to form the composite structure.

The inner space of the composite structure formed by the core may have any shape, since the core can be separated into the at least two portions and/or can be melted using induction heating. For instance, the inner space of the composite structure may even include undercuts, recesses, hollow spaces with only a relatively small opening or connection to another part of the inner space of the composite structure or to the exterior of the composite structure.

In an implementation variant, the method can further comprise placing the fibre material and resin matrix in an outer mould. Such outer mould may form an outer surface of the resulting composite structure. For instance, the outer mould may partially surround the core, so that a portion of the composite structure is manufactured between the outer mould and core. The outer mould may be a rigid mould, a soft mould, a vacuum bag or the like as usually employed for manufacturing of a composite structure.

Alternatively or additionally, the method can further comprise placing an upper mould onto an upper portion of the fibre material and resin matrix. Like the outer mould, the upper mould facilitates forming an upper surface of the composite structure. It may also be arranged, at least partially, at an outer circumference of the composite structure. The upper mould can be a rigid mould, a soft mould, vacuum bag or the like.

Furthermore, the method can further comprise using a separating sheet or separating fluid between the core and/or one or both of the moulds and the resin matrix.

In another implementation variant, when a core including at least one functional component is provided, the method can further comprise measuring a temperature of the composite structure and/or a pressure induced by the composite structure on the core using the at least one functional component. The at least one functional component can be a temperature and/or pressure sensor, preferably arranged close or next to or on the outer surface of the core, so that temperature and/or pressure of the composite structure at the outer surface of the core can be measured. This allows monitoring and controlling of the curing process as well as any other manufacturing step when producing the composite structure, such as a cooling phase or the like. Thus, using such core allows production of composite structures of higher quality.

For example, the method can further comprise controlling a temperature and/or pressure applied to the composite material during the curing based on the measured temperature and/or pressure. The temperature and/or pressure may also be controlled before the actual curing starts as well as after the curing process, such as a cool down phase. Using such core allows monitoring the curing process and, hence, monitoring the composite structure at a location usually not accessible.

In yet another implementation variant, the method may further comprise making a hole into the composite structure. Particularly, the hole can be a through hole fluidly connecting the inner space of the composite structure with another space of the composite structure and/or with an exterior of the component structure. This hole may be provided before curing as well as after curing.

In addition, the hole can have a size sufficiently large enough for the at least two portions of the core to be removed from the inner space of the composite structure and/or can have a size sufficiently large enough for discharging any melted portion of the core from the inner space of the composite structure, including the melted at least one metal element. In addition, if functional components are employed in the core, the hole may have a size sufficiently large for the functional component to be removed in a rigid (non-melted) form as well as flow out in melted form.

The present disclosure is not restricted to the aspects and variants in the described form and order. Specifically, the description of aspects and variants is not to be understood as a specific limiting grouping of features. It is to be understood that the present disclosure also covers combinations of the aspects and variants not explicitly described. Thus, each variant or optional feature can be combined with any other aspect, variant, optional feature or even combinations thereof.

Preferred embodiments of the invention are now explained in greater detail with reference to the enclosed schematic drawings, in which
- Figure 1: schematically illustrates a cross section of a composite structure in a mould including a core; and
- Figure 2: illustrates exemplary flow diagrams of a method of manufacturing a core and subsequently a composite structure.

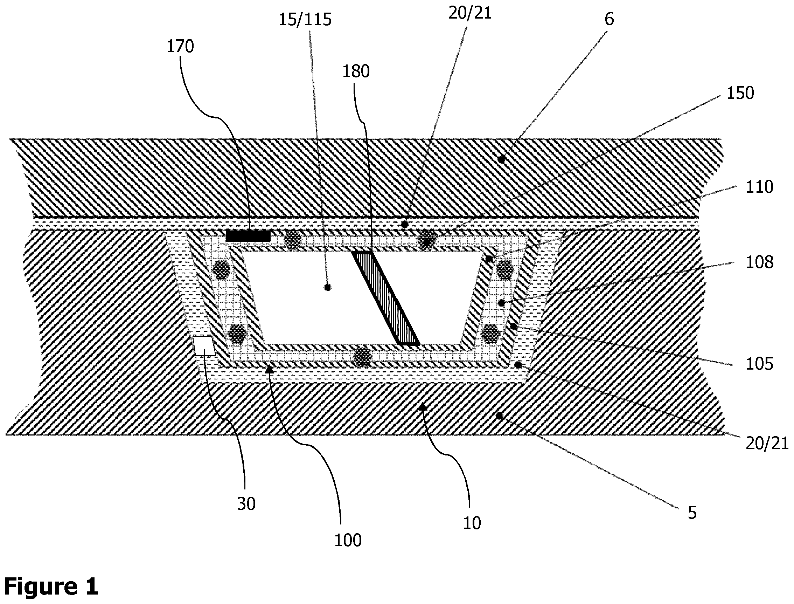

Figure 1 schematically illustrates a cross-section of a composite structure 10 placed in a mould 5, 6 and including a core 100. The core 100 has an outer surface 105 configured to form a moulding surface of an inner space 15 of the composite structure 10. The outer surface 105 of the core 100 may have any form corresponding to the inner surface of the inner space 15 of the composite structure 10. The outer surface 105 of the core 100 may be smooth, or may have any surface finish or texture necessary to produce the inner surface of the inner space 15 of the composite structure 10.

The core 100 further has at least one metal element 150, seven of which are illustrated in Figure 1 drawn as darker filled circles and only one is provided with a reference sign for clarity of the drawing. The at least one metal element 150 is configured to be heated by induction heating. Moreover, the at least one metal element 150 divides the core 100 in at least two portions. As illustrated in Figure 1, the seven metal elements 150 are arranged in a longitudinal direction of the core 100 (a direction perpendicular to the drawing plane of Figure 1), so that the core 100 is divided into seven portions arranged in a circumferential direction (arranged in the drawing plane of Figure 1). It is to be understood that the metal element 150 may also run in different directions arranged at any angle to the longitudinal direction, including being perpendicular to the longitudinal direction, i.e. being parallel to the drawing plane of Figure 1.

According to another example, the metal element 150 may be employed to form at least a part of the outer surface 105. In this case, the metal element 150 divides the core 100 into an "inner" portion 108, 110 and the outer surface 105.

The at least one metal element 150 may be formed of a different material than the remainder 105, 108, 110 of the core 100. These different materials may have different melting temperatures. When applying induction heating (i.e. an alternating magnetic field), at least the metal elements 150 can melt, so that the core is disaggregated into the at least two portions. The remainder 105, 108, 110 of the core 100 may also be made from a metallic material or a material including a metal or further component that can be heated by induction heating. Thus, when applying an electromagnetic induction to the core 100, the core 100 can entirely melt to be discharged from the interior space 15 of the composite structure 10.

Alternatively or additionally, the core 100 may include at least one section formed as a honeycomb structure 108. Such honeycomb structure 108 particularly forms a framework including a plurality of empty spaces, so that the core 100 can be made in a very lightweight fashion. Optionally, the core 100 can form an inner shell 110, which delimits an open space 115 inside of the core 100. Thus, compared to conventional full body cores, the disclosed core 100 is very light.

Also alternatively or additionally, the core 100 can comprise a reinforcing element 180. While the reinforcing element 180 illustrated in Figure 1 is drawn inside of the open space 115 of the core 100, this is to be understood only as one example. Of course, the reinforcing element 180 may entirely or at least partially be arranged between inner shell 110 and outer surface 105 of the core 100, in order to provide additional strength to the particular portion of the core 100.

Furthermore, the core 100 can comprise at least one functional element 170 integrated into the core 100. Such functional element 170 can be a temperature sensor, a pressure sensor, an electric conductor, or the like. As can be seen from Figure 1, the functional component 170 can be arranged at the outer surface 105 of the core 100. This allows monitoring and controlling of the composite structure 10.

In order to provide the core 100 with the outer surface 105, inner shell 110, any particular structure 108 (such as a honeycomb structure), the at least one metal element 150, any functional component 170, and/or any reinforcing element 180, the core 100 may be formed using an additive layer manufacturing method. Thus, when manufacturing each layer of the core 100, any surface properties, internal structures, metal elements 150, functional component 170, reinforcing element 180, etc. can be integrated and manufactured at once. Thus, a core 100 of any required shape to form the internal space 15 of the composite structure 10 can be achieved in a fast and easy manner that is also cost-effective. This manufacturing method further allows a combination of different materials, so that the core 100 can include portions of different capabilities, for example, having different melting temperatures. It also facilitates integration of the metal element 150, and/or functional component 170.

Only as an example, the core 100 may be made of at least one metal material, a bimetal, a polymer, a plastic or a combination thereof.

The composite structure 10 can be produced by providing such core 100, at least one fibre material 20 and a resin matrix 21. The fibre material 20 and resin matrix 21 can also be provided as a pre-preg, i.e. a resin impregnated fibre or woven or nonwoven fibre sheet. The material for the composite structure 10 is placed in an outer mould 5, which forms an outer surface of at least a portion of the composite structure 10. As illustrated in Figure 1, the core 100 partially forms the composite structure placed inside the outer mould 5.

The composite structure 10 may further include an upper part onto which an upper mould 6 is placed, so that an upper surface of the composite structure 10 is formed by the upper mould 6. Instead of a thick mould 6 as illustrated in Figure 1, a vacuum bag or the like may be provided.

The curing of the resin matrix 21, i.e. curing of the composite structure 10, usually requires heating the composite structure 10 and/or applying a pressure onto the moulds 5, 6 and, hence, onto the composite structure 10. Using the functional component 170, the temperature and/or pressure induced onto the core 100, i.e. at an interface between composite structure 10 and core 100, can be measured. Such measured temperature and/or pressure can further be used to control temperature and/or pressure applied to the composite material 10 during the curing thereof.

As can be derived from Figure 1, once the composite structure 10 is cured, i.e. the resin matrix is cured, the core 100 is enclosed inside the inner space 15 of the composite structure 10. In case the composite structure 10 is not of a straight longitudinal form, which would allow pulling out or pushing out the core 100 from the inner space 15, the core 100 would be trapped inside of the composite structure 10.

Since the core 100 includes at least one metal element 150, an electromagnetic induction can be applied through the composite structure 10, which allows weakening and/or melting the at least one metal element 150. Since metal element 150 divides the core 100, the portions of the core 100 can be separated from one another and subsequently be removed from the inner space 15 of the composite structure 10 more easily. This can be achieved through an opening of the composite structure 10, for example, at one of its longitudinal ends. An exemplary through hole 30 is illustrated in Figure 1 at a side of the composite structure 10. This through hole 30 may also be used to remove the core portions from the inner space 15 of the composite structure 10.

In addition, the remainder of the core 100 may also be heated by induction heating, so that applying the electromagnetic induction may allow melting the entire core 100. For example, a through hole 30 can be provided in the composite structure 10, which is only dimensioned (is so small) to allow discharging of the melted core 100 from the inner space 15 of the composite structure 10. Thus, removing the core 100 may even be achieved through a very small through hole 30, thereby increasing mechanical strength of the resulting composite structure 10.

in another example, the remainder of the core 100 may be achieved by melting the outer surface 105 made from or at least including the at least one metal element 150. Once melted, the outer surface 105 may be removed from the inner space 15 of the composite structure 10, for example through through hole 30, thereby the moulding the composite structure 10 and leaving the remainder of the core 100 having a smaller size than the original core 100. This remainder of the core may then be taken out of the inner space of 15 of the composite structure 10 at a longitudinal end of the composite structure 10 in conventional manner.

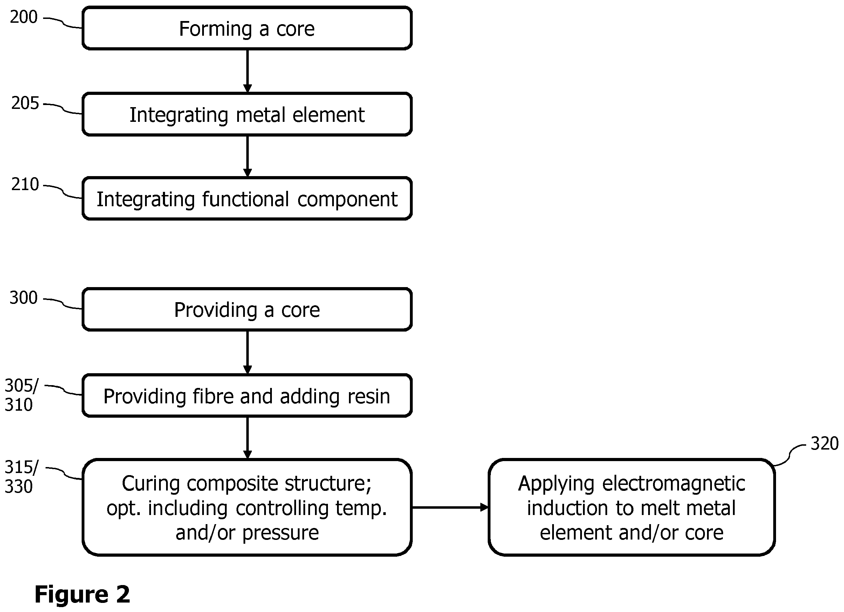

Figure 2 illustrates exemplary flow diagrams of a method of manufacturing a core 100 and subsequently a composite structure 10. Specifically, the general method of manufacturing a core 100 begins by forming 200 a core 100 having an outer surface 105, wherein the outer surface 105 is configured to form a moulding surface of an inner space 15 of the composite structure 10. In step 205, at least one metal element 150 is integrated into the core 100. Such metal element 150 being configured to be heated by induction heating. The at least one metal element 150 is integrated into the core in such a manner, that it divides the core 100 in at least two portions.

The forming 200 and integrating 205 can be combined, for example, by performing an additive layer manufacturing method. Thus, while forming 200 each layer of the core 100, the at least one metal element 150 may also be integrated 205 in a layered fashion.

Optionally, at least one functional component 170 can be integrated in step 210 into the core 100. Preferably, such functional component 170 can be integrated at or near the outer surface 105 of the core 100. The functional component 170, for example, may comprise a temperature sensor and/or a pressure sensor. The functional component 170, particularly its integration 210, may also be combined with the forming 205 of the core and/or the integrating 205 of the at least one metal element 150, for example, in an additive layer manufacturing method.

Once the core 100 is finished, it can be used in a method of producing a composite structure 10, further illustrated in Figure 2. Thus, in step 300, such core 100 is provided. Thereafter, a fibre material 20 is provided in step 305, for example, around at least a portion of the core 100, and in step 310 a resin matrix 21 is added to the fibre material 20. The steps 305 and 310 may be combined by providing a pre-preg, i.e. a resin impregnated fibre material, that is provided around at least a portion of the core 100.

Optionally (and not illustrated in Figure 2), the fibre material 20 and resin matrix 21 can be placed in an outer mould 5 and/or an upper mould 6 is placed onto an upper portion of the fibre material 20 and resin matrix 21.

The uncured composite structure 10 around core 100, and optionally inside mould 5, 6, is then cured in step 315, for example, by application of heat and/or pressure. During the curing a temperature and/or pressure of the composite structure 10 can be measured and, in step 330, the applied temperature and/or pressure can be controlled based on the measurement results. This measuring may be performed with the at least one functional element 170.

In order to remove the core 100 from the cured composite structure 10, an electromagnetic induction is applied in step 320. This electromagnetic induction heats the at least one metal element 150 and/or the entire core 100, thereby melting at least the metal element 150, so that the core 100 is separated in at least two portions. Any melted material can be removed from the inner space 15 of the composite structure 10 through a through hole 30 or any other opening providing a fluid communication between inner space 15 and an exterior of the composite structure 10.

The above description of the drawings is to be understood as providing only an exemplary embodiment of the present invention and shall not limit the invention to this particular embodiment.

## Claims

1. A method of manufacturing a core (100) for producing a composite structure (10), the method comprising:
forming (200) a core (100) having an outer surface (105), wherein the outer surface (105) is configured to form a moulding surface of an inner space (15) of the composite structure (10); and
integrating (205) into the core (100) at least one metal element (150) configured to be heated by induction heating,
wherein the at least one metal element (150) divides the core (100) in at least two portions.

2. The method according to claim 1, wherein the forming (200) of the core (100) comprises forming at least one section of the core (100) as a honeycomb structure (108), and/or wherein the forming (200) of the core (100) comprises forming a reinforcing element (180) of the core (100).

3. The method according to claim 1 or 2, further comprising:
integrating (210) into the core (100) at least one functional component (170), wherein preferably the at least one functional component (170) comprises a temperature sensor and/or a pressure sensor.

4. The method according to one of claims 1 to 3, wherein the forming (200) of the core (100), the integrating (205) of at least one metal element (150) and/or the integrating (210) of at least one functional component (170) is/are performed by an additive layer manufacturing method.

5. The method according to one of claims 1 to 4, wherein the at least one metal element (150) is made from a bimetal.

6. The method according to one of claims 1 to 5, wherein the core (100) is made from at least one metal material or a bimetal, and/or wherein the core (100) and the at least one metal element (150) are formed of materials having different melting temperatures.

7. The method according to one of claims 1 to 6, wherein the forming (200) of the core (100) comprises forming an inner shell (110) of the core (100), wherein the inner shell (110) delimits an open space (115) inside of the core (100).

8. A core (100) for producing a composite structure (10), the core (100) comprising:
an outer surface (105) configured to form a moulding surface of an inner space (15) of the composite structure (10); and
at least one metal element (150) integrated (205) into the core (100) and configured to be heated by induction heating,
wherein the at least one metal element (150) divides the core (100) in at least two portions.

9. The core (100) according to claim 8, wherein the core (100) has at least one section formed as a honeycomb structure (108), and/or wherein the core (100) comprises a reinforcing element (180).

10. The core (100) according to claim 8 or 9, wherein the core (100) is made from at least one metal material or a bimetal, and/or wherein the core (100) and the at least one metal element (150) are formed of materials having different melting temperatures.

11. The core (100) according to one of claims 8 to 10, wherein the core (100) has at least one functional component (170) integrated therein, wherein preferably the at least one functional component (170) comprises a temperature sensor and/or a pressure sensor.

12. A method of producing a composite structure (10), the method comprising:
providing (300) the core (100) according to one of claims 8 to 11;
providing (305) a fibre material (20) around at least a portion of the core (100);
adding (310) a resin matrix (21) to the fibre material (20);
curing (315) the resin matrix (21) with the fibre material (20) to the composite structure (10); and
applying (320) an electromagnetic induction through the composite structure (10) to one of the at least two portions of the core (100) until the at least one metal element (150) melts and/or until the one portion of the core (100) melts.

13. The method according to claim 12, further comprising:
placing the fibre material (20) and resin matrix (21) in an outer mould (5); and/or
placing an upper mould (6) onto an upper portion of the fibre material (20) and resin matrix (21).

14. The method according to claim 12 or 13, when a core (100) according to claim 11 is provided, the method further comprising:
measuring a temperature of the composite structure (10) and/or a pressure induced by the composite structure (10) on the core (100) using the at least one functional component (170); and
controlling (330) a temperature and/or pressure applied to the composite material (10) during the curing (315) based on the measured temperature and/or pressure.

## Patentansprüche

1. Verfahren zur Herstellung eines Kerns (100) zur Herstellung einer Verbundstruktur (10), wobei das Verfahren Folgendes umfasst:
Ausbilden (200) eines Kerns (100) mit einer Außenfläche (105), wobei die Außenfläche (105) dazu ausgestaltet ist, eine Formungsfläche eines inneren Raumes (15) der Verbundstruktur (10) auszubilden; und
Integrieren (205) wenigstens eines Metallelements (150), das dazu ausgestaltet ist, durch induktives Erwärmen erwärmt zu werden, in den Kern (100),
wobei das wenigstens eine Metallelement (150) den Kern (100) in wenigstens zwei Abschnitte teilt.

2. Verfahren nach Anspruch 1, wobei das Ausbilden (200) des Kerns (100) ein Ausbilden wenigstens eines Abschnitts des Kerns (100) als Wabenstruktur (108) umfasst und/oder wobei das Ausbilden (200) des Kerns (100) ein Ausbilden eines Verstärkungselements (180) des Kerns (100) umfasst.

3. Verfahren nach Anspruch 1 oder 2, ferner Folgendes umfassend:
Integrieren (210) wenigstens einer Funktionskomponente (170) in den Kern (100), wobei vorzugsweise die wenigstens eine Funktionskomponente (170) einen Temperatursensor und/oder einen Drucksensor umfasst.

4. Verfahren nach einem der Ansprüche 1 bis 3, wobei das Ausbilden (200) des Kerns (100), das Integrieren (205) wenigstens eines Metallelements (150) und/oder das Integrieren (210) wenigstens einer Funktionskomponente (170) durch ein additives Schichtfertigungsverfahren erfolgt/erfolgen.

5. Verfahren nach einem der Ansprüche 1 bis 4, wobei das wenigstens eine Metallelement (150) aus einem Bimetall hergestellt ist.

6. Verfahren nach einem der Ansprüche 1 bis 5, wobei der Kern (100) aus wenigstens einem Metallmaterial oder einem Bimetall hergestellt ist und/oder wobei der Kern (100) und das wenigstens eine Metallelement (150) aus Materialien mit unterschiedlichen Schmelztemperaturen ausgebildet sind.

7. Verfahren nach einem der Ansprüche 1 bis 6, wobei das Ausbilden (200) des Kerns (100) ein Ausbilden einer Innenhaut (110) des Kerns (100) umfasst, wobei die Innenhaut (110) einen offenen Raum (115) im Inneren des Kerns (100) begrenzt.

8. Kern (100) zur Herstellung einer Verbundstruktur (10), wobei der Kern (100) Folgendes umfasst:
eine Außenfläche (105), die dazu ausgestaltet ist, eine Formungsfläche eines inneren Raumes (15) der Verbundstruktur (10) auszubilden; und
wenigstens ein Metallelement (150), das in den Kern (100) integriert (205) ist und dazu ausgestaltet ist, durch induktives Erwärmen erwärmt zu werden,
wobei das wenigstens eine Metallelement (150) den Kern (100) in wenigstens zwei Abschnitte teilt.

9. Kern (100) nach Anspruch 8, wobei der Kern (100) wenigstens einen Abschnitt aufweist, der als Wabenstruktur (108) ausgebildet ist, und/oder wobei der Kern (100) ein Verstärkungselement (180) umfasst.

10. Kern (100) nach Anspruch 8 oder 9, wobei der Kern (100) aus wenigstens einem Metallmaterial oder einem Bimetall hergestellt ist und/oder wobei der Kern (100) und das wenigstens eine Metallelement (150) aus Materialien mit unterschiedlichen Schmelztemperaturen ausgebildet sind.

11. Kern (100) nach einem der Ansprüche 8 bis 10, wobei der Kern (100) wenigstens eine darin integrierte Funktionskomponente (170) aufweist, wobei vorzugsweise die wenigstens eine Funktionskomponente (170) einen Temperatursensor und/oder einen Drucksensor umfasst.

12. Verfahren zur Herstellung einer Verbundstruktur (10), wobei das Verfahren Folgendes umfasst:
Bereitstellen (300) des Kerns (100) nach einem der Ansprüche 8 bis 11;
Bereitstellen (305) eines Fasermaterials (20) um wenigstens einen Abschnitt des Kerns (100) herum;
Zugeben (310) einer Harzmatrix (21) zu dem Fasermaterial (20);
Aushärten (315) der Harzmatrix (21) mit dem Fasermaterial (20) zu der Verbundstruktur (10); und
Einwirkenlassen (320) einer elektromagnetischen Induktion durch die Verbundstruktur (10) hindurch auf einen der wenigstens zwei Abschnitte des Kerns (100), bis das wenigstens eine Metallelement (150) schmilzt und/oder bis der eine Abschnitt des Kerns (100) schmilzt.

13. Verfahren nach Anspruch 12, ferner Folgendes umfassend:
Anordnen des Fasermaterials (20) und der Harzmatrix (21) in einer äußeren Form (5); und/oder
Anordnen einer oberen Form (6) auf einem oberen Abschnitt des Fasermaterials (20) und der Harzmatrix (21).

14. Verfahren nach Anspruch 12 oder 13, wenn ein Kern (100) nach Anspruch 11 bereitgestellt wird, wobei das Verfahren ferner Folgendes umfasst:
Messen einer Temperatur der Verbundstruktur (10) und/oder eines Drucks, der durch die Verbundstruktur (10) auf den Kern (100) ausgeübt wird, unter Verwendung der wenigstens einen Funktionskomponente (170); und
Regeln (330) einer Temperatur und/oder eines Drucks, mit der/dem der Verbundwerkstoff (10) während des Aushärtens (315) beaufschlagt wird, basierend auf der/dem gemessenen Temperatur und/oder Druck.

## Revendications

1. Procédé de fabrication d'une âme (100) destinée à produire une structure composite (10), le procédé comprenant :
la formation (200) d'une âme (100) ayant une surface externe (105), la surface externe (105) étant configurée pour former une surface de moulage d'un espace interne (15) de la structure composite (10) ; et
l'intégration (205) à l'intérieur de l'âme (100) d'au moins un élément métallique (150) configuré pour être chauffé par chauffage par induction,
dans lequel l'au moins un élément métallique (150) divise l'âme (100) en au moins deux parties.

2. Procédé selon la revendication 1, dans lequel la formation (200) de l'âme (100) comprend la formation d'au moins une section de l'âme (100) comme une structure en nid d'abeilles (108), et/ou dans lequel la formation (200) de l'âme (100) comprend la formation d'un élément de renforcement (180) de l'âme (100).

3. Procédé selon la revendication 1 ou 2, comprenant en outre :
l'intégration (210) à l'intérieur de l'âme (100) d'au moins un composant fonctionnel (170), de préférence dans lequel l'au moins un composant fonctionnel (170) comprend un capteur de température et/ou un capteur de pression.

4. Procédé selon une des revendications 1 à 3, dans lequel la formation (200) de l'âme (100), l'intégration (205) d'au moins un élément métallique (150) et/ou l'intégration (210) d'au moins un composant fonctionnel (170) est/sont effectuée(s) par un procédé de fabrication de couches additives.

5. Procédé selon une des revendications 1 à 4, dans lequel l'au moins un élément métallique (150) est constitué d'un bimétal.

6. Procédé selon une des revendications 1 à 5, dans lequel l'âme (100) est fabriquée à partir d'au moins un matériau métallique ou d'un bimétal, et/ou dans lequel l'âme (100) et l'au moins un élément métallique (150) sont constitués de matériaux ayant des températures de fusion différentes.

7. Procédé selon une des revendications 1 à 6, dans lequel la formation (200) de l'âme (100) comprend la formation d'une coque interne (110) de l'âme (100), dans lequel la coque interne (110) délimite un espace ouvert (115) à l'intérieur de l'âme (100).

8. Âme (100) destinée à produire une structure composite (10), l'âme (100) comprenant :
une surface externe (105) configurée pour former une surface de moulage d'un espace interne (15) de la structure composite (10) ; et
au moins un élément métallique (105) intégré (205) à l'intérieur de l'âme (100) et configuré pour être chauffé par chauffage par induction,
dans laquelle l'au moins un élément métallique (150) divise l'âme (100) en au moins deux parties.

9. Âme (100) selon la revendication 8, l'âme (100) ayant au moins une section formée comme une structure en nid d'abeilles (108), et/ou l'âme (100) comprenant un élément de renforcement (180).

10. Âme (100) selon la revendication 8 ou 9, l'âme (100) étant fabriquée à partir d'au moins un matériau métallique ou d'un bimétal, et/ou l'âme (100) et l'au moins un élément métallique (150) étant constitués de matériaux ayant des températures de fusion différentes.

11. Âme (100) selon une des revendications 8 à 10, l'âme (100) ayant au moins un composant fonctionnel (170) intégré à l'intérieur, de préférence dans laquelle l'au moins un composant fonctionnel (170) comprend un capteur de température et/ou un capteur de pression.

12. Procédé de production d'une structure composite (10), le procédé comprenant :
l'obtention (300) de l'âme (100) selon une des revendications 8 à 11 ;
la mise en place (305) d'un matériau fibreux (20) autour d'au moins une partie de l'âme (100) ;
l'ajout (310) d'une matrice de résine (21) au matériau fibreux (20) ;
le durcissement (315) de la matrice de résine (21) avec le matériau fibreux (20) en la structure composite (10) ; et
l'application (320) d'une induction électromagnétique à travers la structure composite (10) à une partie donnée des au moins deux parties de l'âme (100) jusqu'à ce que l'au moins un élément métallique (150) fonde et/ou jusqu'à ce que la partie donnée de l'âme (100) fonde.

13. Procédé selon la revendication 12, comprenant en outre :
le positionnement du matériau fibreux (20) et de la matrice de résine (21) dans un moule externe (5) ; et/ou
le positionnement d'un moule supérieur (6) sur une partie supérieure du matériau fibreux (20) et de la matrice de résine (21).

14. Procédé selon la revendication 12 ou 13, dans lequel une âme (100) selon la revendication 11 est obtenue, le procédé comprenant en outre :
la mesure d'une température de la structure composite (10) et/ou d'une pression induite par la structure composite (10) sur l'âme (100) au moyen de l'au moins un composant fonctionnel (170) ; et
la régulation (330) d'une température et/ou d'une pression appliquées au matériau composite (10) pendant le durcissement (315) sur la base de la température et/ou de la pression mesurées.
